## Europäisches Patentamt
## European Patent Office
## Office européen des brevets

(11) Numéro de publication: **0 098 194**
**B1**

(12) **FASCICULE DE BREVET EUROPÉEN**

(19)

(45) Date de publication du fascicule du brevet:
23.07.86

(21) Numéro de dépôt: **83401215.5**

(22) Date de dépôt: **14.06.83**

(51) Int. Cl.⁴: **B 60 Q 1/40,** H 01 H 3/50

(54) Capteur interrupteur, en particulier pour la commande de l'arrêt des indicateurs de changement de direction de véhicules automobiles.

(30) Priorité: **18.06.82 FR 8210652**

(43) Date de publication de la demande:
**11.01.84 Bulletin 84/2**

(45) Mention de la délivrance du brevet:
**23.07.86 Bulletin 86/30**

(84) Etats contractants désignés:
**DE FR GB IT**

(56) Documents cité:
**DE-A-1 630 756**
**DE-A-2 849 686**
**FR-A-2 342 184**

(73) Titulaire: **JAEGER, 2, rue Baudin, F-92303 Levallois-Perret (FR)**

(72) Inventeur: **Mouchet, Bernard, 12 allée de Fontainebleau, F-75019 Paris (FR)**
Inventeur: **Chretien, Louis, 188- 208 rue de Courbevoie, F-92000 Nanterre (FR)**

(74) Mandataire: **Schrimpf, Robert, Cabinet Regimbeau 26, Avenue Kléber, F-75116 Paris (FR)**

LIBER, STOCKHOLM 1986

## Description

La présente invention concerne les organes de commutation électrique.

La présente invention concerne en particulier, mais non exclusivement la commande de l'arrêt des indicateurs de changement de direction d'un véhicule automobile.

La présente invention concerne plus précisément un capteur formant interrupteur électrique susceptible de commander à distance des commutateurs principaux munis de bobines électriques adaptées pour assurer leur autoaintien en position active.

De tels commutateurs principaux munis de bobines d'automaintien et susceptibles d'être utilisès pour la commande des indicateurs de changement de direction sont décrits par exemple dans les demandes de brevet Allemandes publiées sous les n° 1 630 756 et 2 849 686.

L'un des avantages de ces commutateurs munis de bobines d'automaintien est de permettre un déverrouillage à distance, par simple ouverture du circuit d'alimentation des bobines d'automaintien.

On a proposè des interrupteurs aptes à commander l'arrêt des indicateurs de changement de direction formès de lames souples sous enveloppe de verre et commandés par des aimants solidaires d'un levier actionné généralement avec entraînement par friction, par le volant du véhicule.

On a également proposé, comme cela est décrit par exemple dans la demande de brevet Allemande précitée n° 2 840 686, de commander des interrupteurs à l'aide de leviers actionnés par des cames mécaniques entraînées par le volant du véhicule. Les cames et leviers sont conformés pour n'agir sur les interrupteurs associés que dans un sens de rotation du volant. Ces interrupteurs sont connectés en série des circuits d'alimentation des bobines d'automaintien des commutateurs principaux.

Tous ces systèmes jusqu'ici proposés s'avèrent à la fois complexes et volumineux.

Enfin et surtout, avec tous ces systèmes, lorsque le volant est initialement tourné dans une position apte à commander l'ouverture des capteurs-interrupteurs associés, on ne peut obtenir un maintien automatique, en position active, du commutateur principal de commande des indicateurs de changement de direction, sans intervention sur le volant, puisque précisément, les circuits d'alimentation des bobines d'automaintien sont ouverts.

On a tenté de remédier à cet inconvénient en proposant, comme cela est décrit dans la demande de brevet Allemande n° 1 630 756 de déplacer relativement les leviers et cames précités, grâce à un électro-aimant de telle sorte que les cames ne puissent agir sur les leviers qu'après commande des indicateurs de changement de direction, provoquant un déplacement des leviers dans le chemin des cames.

Ce système, en raison notamment de la présence de l'électroaimant, et d'un ressort de rappel, s'avère complexe, volumineux et peu fiable.

D'autre part, les leviers et cames peuvent être endommagés quand ledit déplacement des leviers dans lè chemin des cames est opéré lorsque ceux-ci sont en vis-àvis.

La Demanderesse se propose maintenant de perfectionner les capteurs-interrupteurs en particulier pour la commande de l'arrêt des indicateurs de changement de direction.

Plus précisément, la présente invention vient maintenant proposer un nouveau capteur-interrupteur parfaitement fiable, peu volumineux et peu coûteux et qui surtout permette de verrouiller un commutateur associé muni de bobines d'auto-maintien, quelle que soit la position du volant.

Plus précisément, la présente invention propose un capteur-interrupteur, en particulier pour la commande de l'arrêt des indicateurs de changement de direction d'un véhicule automobile, qui comprend un boîtier qui loge une pièce support, au moins partiellement ferromagnètique, libre de basculement autour d'un premier axe, un balancier monté à pivotement sur la pièce support autour d'un second axe médian parallèle au premier, des moyens aptes à appliquer une force de commande de pivotement sur une première extrémité du balancier, une bobine électrique adaptée pour interdire le basculement de la pièce support lorsque la bobine est alimentée afin d'immobiliser l'axe de pivotement du balancier, et au moins un organe interrupteur disposé dans le plan de pivotement du balancier, à proximité de la seconde extrémité de celui-ci, de telle sorte que l'état de cet organe interrupteur soit modifié par actionnement du balancier, lors du pivotement de celui-ci, autour du second axe, lorsque la bobine est alimentée.

Selon une caractéristique avantageuse de la présente invention, la bobine électrique est adaptée pour interdire le basculement de la pièce support par rapport au boîtier lorsque la bobine est alimentée en fixant alors le second axe de pivotement du balancier par rapport audit boîtier afin de produire un déplacement de la seconde extrémité du balancier lors de l'application de la force de commande de pivotement, et pour autoriser un basculement de la pièce-support autour du premier axe après libération du second axe lorsque la bobine n'est plus alimentée afin de limiter alors le déplacement de la seconde extrémité du balancier lors de l'application de la force de commande.

Selon une caractéristique avantageuse de la présente invention, le capteur comprend deux organes interrupteurs disposés respectivement de part et d'autre du balancier dans le plan de pivotement de celui-ci.

Selon une autre caractéristique avantageuse de la présente invention, chaque organe interrupteur comprend une paire de contacts électriques et une lamelle électriquement conductrice, associée à chaque paire de contacts électriques et sollicitée en contact avec ceux-ci par ressort.

Selon une autre caractéristique avantageuse de la présente invention, la première extrémité du balancier recevant la force de commande de pivotement est disposée à l'opposé du premier axe par rapport au second.

Selon une autre caractéristique avantageuse de la présente invention, la distance séparant le premier axe et le second axe est sensiblement égale à la distance séparant le second axe du point de contact du balancier sur chaque organe interrupteur.

Selon une autre caractéristique avantageuse de la présente invention, la pièce-support est sollicitée en permanence par ressort en contact avec le noyau de la bobine électrique.

Selon une autre caractéristique avantageuse de la présente invention, le second axe est sensiblement perpendiculaire à l'axe de la bobine. Cet axe est formé d'un pivot porté par une branche de ladite pièce, cette branche s'étendant parallèlement à ce même axe de la bobine, et le balancier est lui-même sensiblement parallèle à l'axe de la bobine.

Selon une autre caractéristique avantageuse de la présente invention, les organes interrupteurs sont connectés en série de bobines d'automaintien de commutateur.

Selon encore une autre caractéristique de la présente invention, le balancier est commandé par une came solidaire du volant d'un véhicule et les organes interrupteurs sont connectés en série avec des bobines d'automaintien intégrées à des commutateurs de changement de direction du véhicule automobile.

D'autres caractéristiques et avantages de la présente invention apparaîtront à la lecture de la description détaillée qui va suivre, et en regard des dessins annexés, qui doivent être considérés comme incorporés à la description par la référence qui leur est faite ici, et sur lesquels:

- la figure 1 représente une vue de face d'un capteurinterrupteur, conforme à la présente invention, coffret ouvert,

- la figure 2 représente une vue en coupe du même capteur-interrupteur selon un plan de coupe référencé II-II sur la figure 1,

- la figure 3 illustre schématiquement le fonctionnement du capteur-interrupteur conforme à la présente invention,

- la figure 4 représente une vue schématique éclatée du capteur-interrupteur conforme à la présente invention,

- la figure 5 illustre un mode de connection entre le capteur-interrupteur conforme à la présente invention, et un commutateur muni de bobines d'automaintien, pour la commande des indicateurs de changement de direction d'un véhicule automobile,

- les figures 6 et 7 représentent deux vues en coupe longitudinale d'un commutateur susceptible d'être associé un capteur interrupteur conforme à la présente invention.

La figure 8 représente une vue de dessous du commutateur sur laquelle apparaissent les deux plans de coupe des figures 6 et 7 référencés respectivement VI-VI et VII-VII.

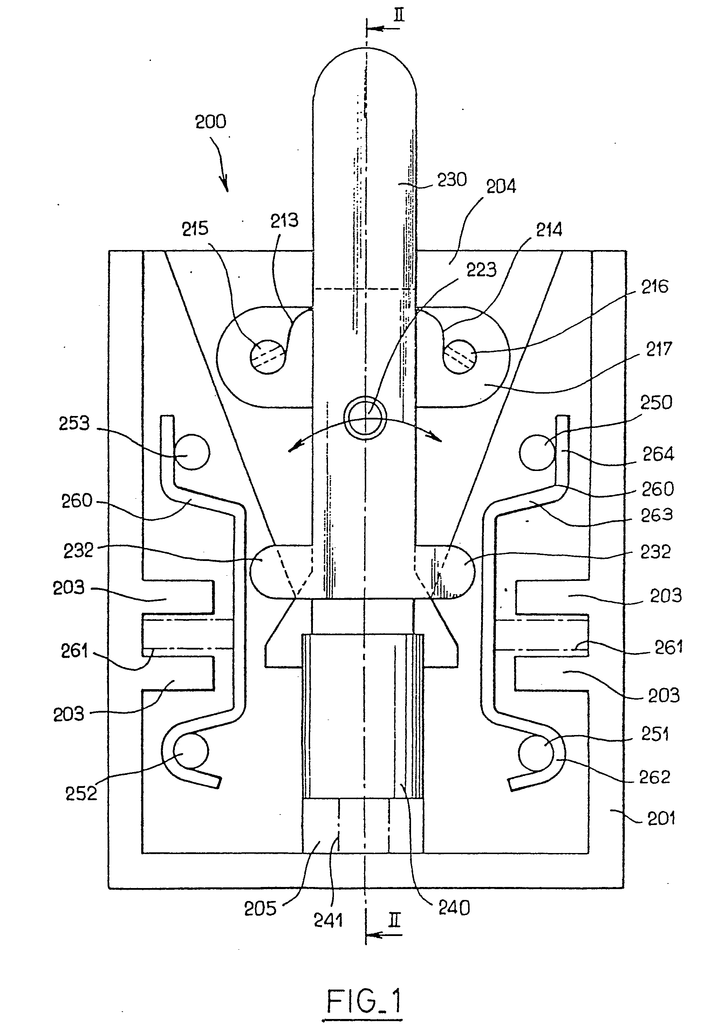

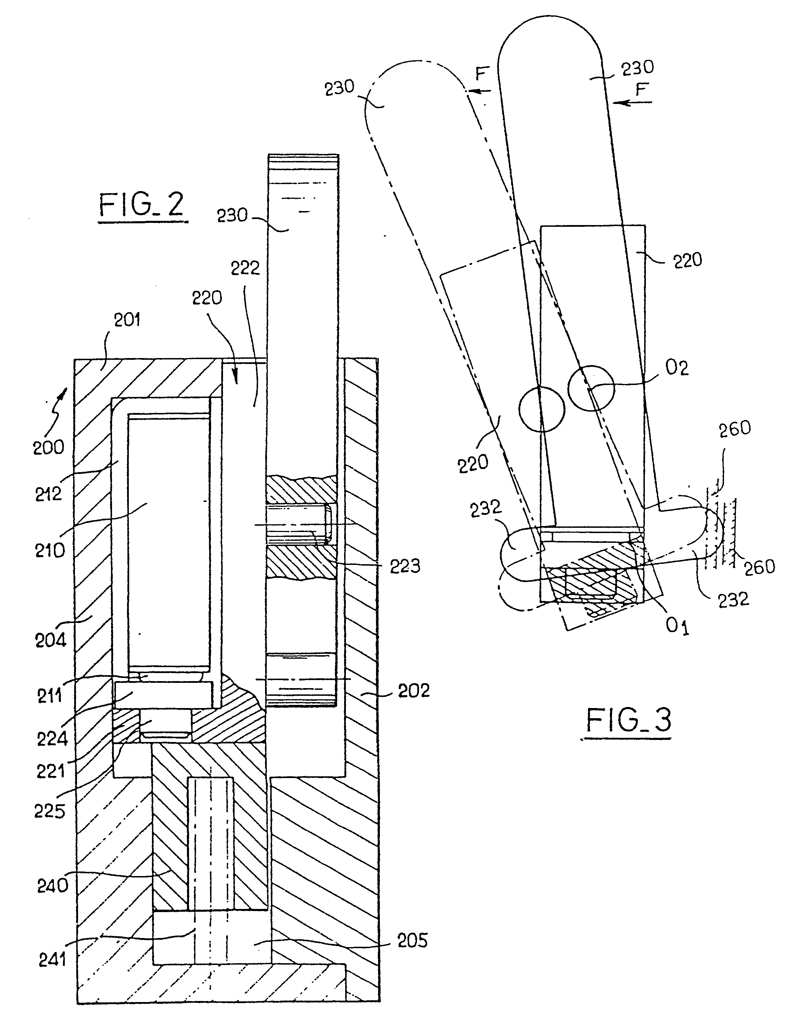

Tel que cela est représenté sur les figures 1 et 2, le capteur-interrupteur 200 comprend un coffret ou boîtier 201 muni d'un couvercle 202. Une bobine 210 est immobilisée dans le coffret 201 à l'aide de tous moyens appropriés, non représentés.

Une pièce-support 220 en forme de "L", portant un pivot 223 pour un balancier 230, est sollicitée en contact avec le noyau 211 de la bobine précitée.

Plus précisément, comme cela est représenté sur les figures, ladite pièce-support en "L" 220, présente une première aile 221 de faibles dimensions, d'extension perpendiculaire à l'axe de la bobine et qui porte une pièce ferromagnétique 224 en contact avec une première extrémité du noyau 211 de la bobine 210. Ladite pièce ferromagnétique 224 est immobilisée sur la première aile 221 de la pièce-support 220 à l'aide de tous moyens appropriés, tel que par exemple par vissage d'une portion filetée 225 formant corps avec la pièce ferromagnétique 224, dans un alésage correspondant prévu dans la première aile 221 de la pièce-support 220.

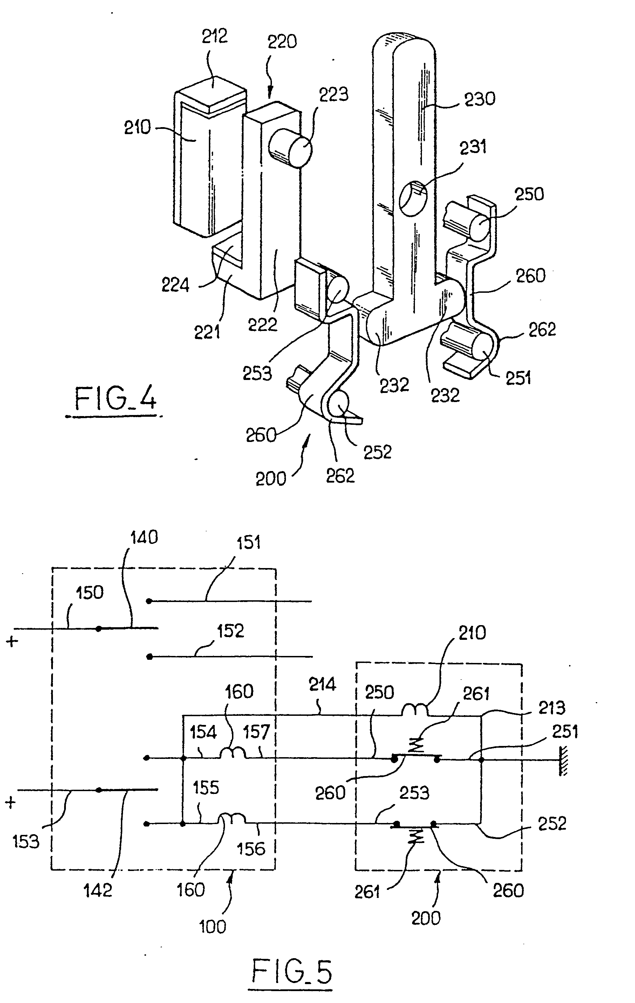

De préférence, tel que cela est représenté sur les figures 2 et 4, la bobine 210 est munie d'une armature 212 de forme générale en "L" en contact d'une part avec la seconde extrémité du noyau 211 de la bobine 210, d'autre part avec la pièce ferromagnétique 224 précitée. Ainsi, l'armature 212 s'étend tout le long de la bobine 210 et ferme le circuit magnétique en coopération avec la pièce 224.

La pièce-support 220 et la pièce ferromagnétique 224 qui lui est associée, sont sollicitées en rapprochement de la bobine 210, grâce à une douille 240 guidée libre de translation dans le coffret 201 parallèlement à l'axe de la bobine 210 et munie d'un alésage borgne, ouvert à l'opposée de la pièce-support 220, et destinée à recevoir un ressort de compression 241 schématiquement représenté sur la figure 2. Plus précisément, le ressort de compression 241 est en appui d'une part sur l'une des parois du coffret 201, d'autre part sur le fond de l'alésage borgne prévu dans la douille 240. La douille 240 est ainsi guidée dans une chambre 205 délimitée par le coffret 201 et le couvercle 202.

La seconde aile 222 de la pièce support 220 d'extension parallèle à l'axe de la bobine, porte à sa partie médiane, un pivot 223 qui lui est perpendiculaire et s'étend à l'opposè de la première aile 221. Le balancier 230 sensiblement rectiligne est muni, au voisinage de sa partie médiane, d'un alésage 231, permettant de disposer ce balancier 230 libre de pivotement sur le pivot 223 précité. L'une des extrémités du balancier 230 émerge à l'extérieur du coffret, de façon à recevoir une force de commande, possédant au moins une composante normale au balancier 230 et à l'axe de pivotement du balancier formé par le pivot 223, tel que cela est représenté par la flèche F sur la figure 3.

La seconde extrémité du balancier 230 disposée à l'intérieur du coffret, présente latéralement dans le plan de pivotement, deux protubérances arrondies 232, dirigées à l'opposé l'une de l'autre.

Tel que cela est représenté sur la figure 1, la paroi arrière 204 du coffret 201 est munie de quatre plots de contacts rigides et fixes, 250, 251, 252 et 253, en saillie à l'intérieur du coffret 201 précité. Plus précisément, ces quatre contacts 250 à 253 sont disposés deux à deux, symétriquement de part et d'autre du plan de symétrie du balancier 230, perpendiculaire au plan de basculement de ce dernier. Deux lamelles rigides 260 d'extension générale parallèle à l'axe de la bobine, sont disposées respectivement sur l'extérieur des plots fixes 250 à 253, et sont sollicités en contact avec ces plots par des ressorts de compression 261 (schématiquement représentés sur les figures), en appui d'une part sur la surface intérieure des parois latérales du coffret 201, d'autre part sur lesdites lamelles 260. Plus précisément, tel que cela est représenté en particulier sur la figure 1, l'une des extrémités des lamelles 260 possède une forme incurvée 262 épousant sensiblement la forme extérieure des plots 251 et 252, tandis que l'autre extrémité des lamelles 268 présente une première section 263 en décrochement vers l'extérieur qui se prolonge par une seconde section 264 parallèle au corps principal des lamelles 260.

D'autre part, comme cela apparaît sur la figure 1, lesdites protubérances 232 prévues sur le balancier 230, sont susceptibles de venir en contact avec les lamelles 260, lorsque le balancier est pivoté autour du pivot 223 avec une force appropriée. Le contact entre le balancier 230 et les lamelles 260 est établi du côté de la seconde extrémité des lamelles 260, par rapport aux ressorts de compression 261. Ainsi, par compression du ressort 261, la poussée produite par le balancier 230 entraîne le pivotement des lamelles 260 autour des plots 251 et 252, de façon à provoquer le déplacement de ladite seconde section 264 des lamelles 260, en éloignement des plots 250 et 253 correspondants.

De préférence, afin d'éviter les problèmes de tolérance, des contacts élastiques sont prévus entre ladite seconde section 264 et les plots correspondants 250 ou 253.

Tel que cela apparaît également sur la figure 1, les ressorts de compression 261 sont de préférence guidés par des projections 203 prévues sur la surface intérieure des parois latérales du coffret 201.

De plus, les fils de sortie 213 et 214 de la bobine 210 sont reliés à des bornes 215, 216 ou vis appropriées, disposées au niveau d'une plaque de raccordement 217 supportée par la paroi arrière 204 du coffret.

On va maintenant décrire plus en détail le fonctionnement du capteur-interrupteur 200, en regard de la figure 3, sur laquelle le balancier 230 et la pièce-support 220 ont été représentés en traits pleins, dans le cas où la bobine 210 est alimentée, et en traits interrompus, lorsque la bobine n'est pas alimentée.

Tel que cela est représenté sur la figure 3, la force du ressort de compression 261 et la force de poussée du ressort de compression 241 sont déterminées de telle sorte que, lorsque la bobine 210 n'est pas alimentée, toute action latérale sur l'extrémité du balancier 230, émergeant du coffret 201, amène une protubérance 232 en contact de l'une des lamelles 260 associées, puis entraîne le basculement de la pièce-support 220 et du balancier 230, autour d'un premier axe parallèle au pivot 223 et référencé 01, de telle sorte que, dans un tel cas, la lamelle 260 ne soit pas séparée des plots 250 et 251, ou 252 et 253 associés. A ce niveau, les contacts élastiques précités peuvent avoir une grande importance pour éviter l'ouverture intempestive du circuit électrique.

Dans un tel cas, lorsqu'une force de commande de pivotement est appliquée à la première extrémité du balancier, la pièce-support 220 bascule autour de l'axe 01 et de ce fait, le pivot 223 étant déplacé, le pivotement de la seconde extrémité du balancier est limité.

L'axe de basculement 01 est déterminé par le contact de la pièce ferromagnétique 224 sur le noyau 211 de la bobine 210.

Par contre, lorsque la bobine 210 est alimentée, elle maintient fermement en position la pièce 220, de telle sorte que le pivot 223 précité soit parfaitement fixe. Dans un tel cas, on comprend que toute action latérale produite sur l'extrémité émergeante du balancier 230, est répercutée, par l'intermédiaire des protubérances 232, sur les lamelles 260, et tend par conséquent à écarter celles-ci, soit du plot 250, soit du plot 253, selon le sens de pivotement choisi pour le balancier 230. Dans ce dernier cas, le centre de pivotement du balancier 230 est déterminé par le centre 02 du pivot 223 prévu sur la pièce-support 220.

En d'autres termes, lorsque la bobine 210 n'est pas alimentée, le balancier ne produit aucun effet sur les lamelles 260. Par contre, lorsque la bobine 218 est alimentée, le balancier lors de son pivotement assure le déplacement des lamelles 260. Un tel capteur, sensible à une force de commande quelconque peut être utilisé pour modifier sur demande un circuit électrique en fonction de la présence ou non de cette force de commande.

Tel que cela est représenté sur la figure 5, le capteur-interrupteur 200 peut être avantageusement associé à un commutateur 100 muni de bobines d'automaintien pour assurer la commande d'indicateurs de changement de direction d'un véhicule automobile.

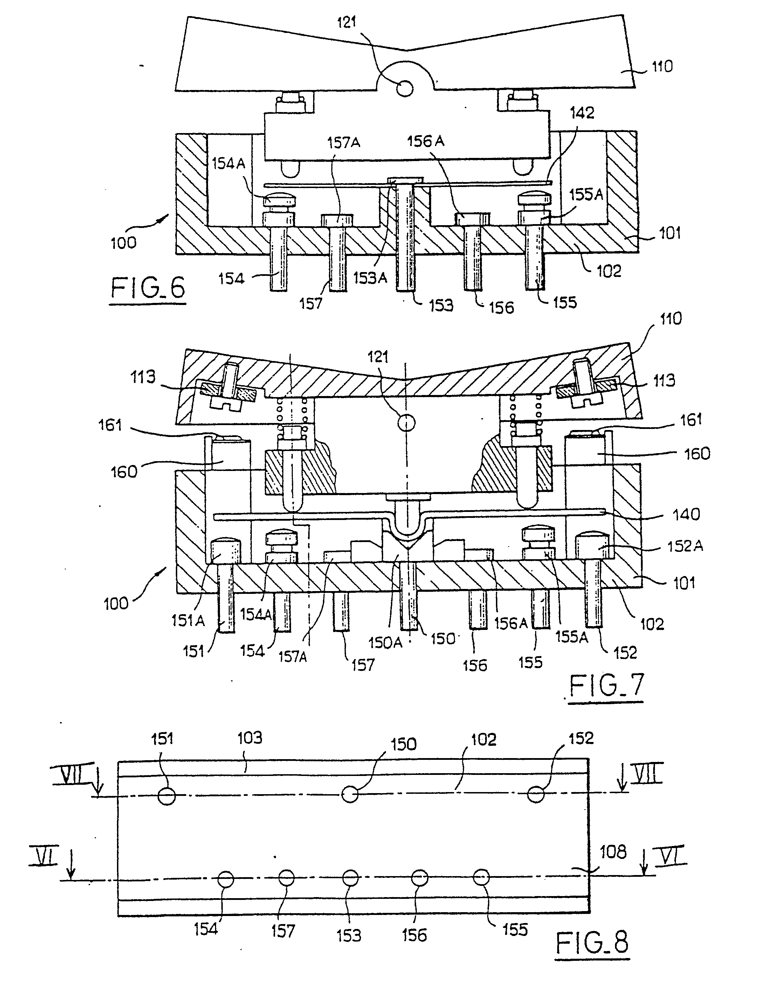

Un mode de réalisation d'un tel commutateur 100 muni de bobines d'automaintien est représenté sur les figures 6 et 7.

Le commutateur 100 représenté sur ces figures se compose d'un boîtier 101, sur lequel est montée pivotante en 121 une touche 110.

L'embase 102 du boîtier 101 est munie d'une pluralité de contacts électriques ou plots traversants 150, 151 et 152, espacés et longitudinalement alignés, ainsi qu'une seconde série de contacts ou plots 153, 154, 155, 156 et 157, également espacés entre eux et longitudinalement alignés, et ceci symétriquement à la première série de plots par rapport à l'axe longitudinal du commutateur. Chacun de ces plots 150 à 157 est muni d'une tête évasée 150A à 157A, en appui sur la surface intérieure de l'embase 102.

Une lamelle 140 en contact avec un plot central 150 est portée en appui contre un plot latéral 151 ou 152 lors du pivotement de la touche 110, pour établir une liaison électrique entre le plot 150 et le plot 151 ou le plot 158 et le plot 152.

Le commutateur comprend deux bobines électriques 160, immobilisées à chacune des extrémités du boîtier 101. Les bobines électriques 160 sont disposées de telle sorte que leur noyau 161 s'étende sensiblement parallèlement à la direction générale de déplacement des touches 110. Les premières sorties des bobines 160 sont reliées respectivement, aux plots latéraux 154 et 155, tandis que les secondes sorties des mêmes bobines 160, sont reliées respectivement aux plots 156 et 157. De plus, le plot 153 en contact avec une lamelle 142 est relié à l'une des bornes d'une source de tension (non représentée); tandis que les plots 156 et 157 sont reliés à l'autre borne de la même source de tension.

La touche 110 est munie d'au moins d'une portion ferromagnétique 113 positionnée de telle sorte qu'elle vienne en contact (avec un entrefer nul) avec le noyau 161 de la bobine 160 associée, lorsque la touche 110 est basculée dans le sens approprié, et ce, d'une amplitude suffisante pour mettre en contact les lamelles 142 et l'un des plots latéraux 154 ou 155.

Lorsqu'une liaison électrique est établie entre les plots 153 et 154, ou 153 et 155, de façon à alimenter les bobines 160, la position active de la touche dans laquelle les plots 150 et 151 ou 150 et 152 sont reliés est maintenue tant que le circuit d'excitation des bobines 160 n'est pas coupé, et ce, grâce à la force portante générée par la bobine 160, qui permet de maintenir en position ladite touche 110.

La coupure du circuit d'excitation des bobines 160 peut être obtenue soit en agissant sur la touche 110, de façon à solliciter le retour de celle-ci en position de repos, ce qui tend à séparer la lamelle 142 du plot de contact 154 ou du plot de contact 155, soit encore en agissant sur le circuit électrique, reliant les plots 153, 156 et 157 à la source d'alimentation, comme cela apparaît à l'examen de la figure 5.

Sur cette figure, le plot central 150 du commutateur 100 est relié à l'une des bornes de la batterie, telle que la borne positive, tandis que les plots latéraux de travail 151 et 152, sont reliés respectivement à l'une des bornes du filament (non représenté) d'une lampe indicatrice de changement de direction, dont l'autre borne assure le retour sur l'alimentation, c'est-à-dire en l'occurence, la masse.

De plus, tel que cela est représenté sur la figure 5, le plot central 153 du commutateur 100 est relié à la borne positive de la source d'alimentation du véhicule, tandis que les plots latéraux 154 et 155 de ce même commutateur, sont reliés en commun, et reliés, par l'intermédiaire de la bobine 210 du capteur-interrupteur 200 à la masse du véhicule. De plus, tel que cela est représenté toujours sur la figure 5, les plots 156 et 157 du commutateur 100 sont reliés respectivement aux plots 253 et 250 du capteur-interrupteur, tandis que les plots 251 et 252 sont reliés en commun à la masse du véhicule.

Le fonctionnement de l'ensemble représenté sur la figure 5 est le suivant;

Lorsque le conducteur désire signaler qu'il souhaîte changer de direction, il intervient sur la touche 110 en déplaçant celle-ci pour établir une liaison électrique, soit entre le plot 150 et le plot 151, ou le plot 150 et le plot 152, d'une part, de façon à alimenter l'un des filaments de lampe indicatrice, et soit entre le plot 153 et le plot 154, ou le plot 153 et le plot 155 d'autre part, de telle sorte que la bobine 160 disposée du côté du basculement de la touche 110 soit alimentée, et ainsi maintienne en position la touche 110.

En fait, selon le mode de réalisation représenté, les plots 154 et 155 étant reliés, les deux bobines 160 sont alimentées simultanément. Toutefois du côté du basculement, l'entrefer est nul, alors que de l'autre côté, l'entrefer est important; on comprend donc qu'en raison de ce déséquilibre, la touche est maintenue en position.

Lorsque le changement de direction est terminé, et que le conducteur du véhicule ramène le volant dans sa position neutre, une came solidaire de l'arbre du volant, agissant sur l'extrémité émergeante du balancier 230 tend à pivoter celui-ci et ainsi ouvre le contact entre la lamelle 260 et le plot 250, ou le plot 253, associé à la bobine 160 du commutateur qui est active. L'alimentation de la bobine 160 est alors supprimée, et la touche 110 du commutateur 100 peut reprendre sa position neutre. Simultanément, l'alimentation de la bobine 210 est supprimée, le capteur 200 revient alors en position de repos.

Il convient de noter que lors du changement de direction proprement dit, l'action du balancier 230 sur la lamelle 260, qui n'est pas associée à la bobine 160 active du commutateur, est sans effet.

De façon similaire, avant toute intervention sur le commutateur 100, la bobine 210 se trouve automatiquement non alimentée. Si par conséquent, la came solidaire de l'arbre du volant est placée dans une position telle qu'elle entraîne le pivotement du balancier 230, ce dernier, ainsi que la pièce-support 220 associée, basculeront autour de l'axe 01 et de ce fait, la lamelle 260 ne sera pas déplacée. Dans un tel cas, l'actionnement de la touche 110 du commutateur est pleinement efficace et entraîne la commande des indicateurs de changement de direction d'une part et l'alimentation des bobines 160 par l'intermédiaire des interrupteurs 260 d'autre part.

La bobine 210 travaille avec un entrefer nul, et peut donc prendre des dimensions petites. De plus, cette bobine étant traversée par des courants faibles, on comprend que les échauffements occasionnés seront limités.

Par rapport au système de rappel de clignotants, composé d'un flexible en prise par friction sur l'arbre du volant, le capteur-interrupteur conforme à la présente invention permet aisément de commander le commutateur précédemment décrit, à distance. De même, par rapport au système de rappel de clignotants du type formé d'un aimant disposé sur la colonne de direction du véhicule automobile, qui est mise en rotation par le volant, et de contacts à lames flexibles associées actionnés au moyen de l'aimant, le capteur-interrupteur conforme à la présente invention s'avére beaucoup plus simple et beaucoup plus fiable, et présente l'avantage d'autoriser la commande des clignotants quelle que soit la position du volant, ce qui n'est, à l'évidence, pas le cas des systèmes précités.

En d'autres termes, les interrupteurs 260 du capteur-interrupteur 200 ne peuvent être ouverts qu'après commande préalable du commutateur 100. Une telle disposition autorise dans tous les cas, quelle que soit la position du volant, le verrouillage du commutateur en position active.

**Revendications**

1. Capteur-interrupteur, en particulier pour la commande de l'arrêt des indicateurs de changement de direction d'un véhicule automobile, caractérisé par le fait qu'il comprend:
   . un boîtier (201) qui loge
   . une pièce-support (220), au moins partiellement ferromagnétique, libre de basculement autour d'un premier axe (01),
   . un balancier (230) monté à pivotement sur la pièce-support (220) autour d'un second axe (02) médian, parallèle au premier,
   . des moyens aptes à appliquer une force de commande (F) de pivotement sur une première extrémité du balancier,
   . une bobine électrique (210) adaptée pour interdire le basculement de la pièce-support (220) lorsque la bobine (210) est alimentée afin d'immobiliser l'axe de pivotement (02) du balancier, et
   . au moins un organe interrupteur (250, 251, 260) disposé dans le plan de pivotement du balancier (230), à proximité de la seconde extrémité de celui-ci, de telle sorte que l'état de cet organe interrupteur soit modifié par actionnement du balancier, lors du pivotement de celui-ci autour du second axe (02), lorsque la bobine est alimentée.

2. Capteur-interrupteur selon la revendication 1, caractérisé par le fait que la bobine électrique (210) est adaptée pour interdire le basculement de la pièce support (220) par rapport au boîtier (201) lorsque la bobine (210) est alimentée en fixant alors le second axe (02) de pivotement du balancier (230) par rapport audit boîtier, afin de produire un déplacement de la seconde extrémité du balancier (238), lors de l'application de la force (F) de commande de pivotement, et pour autoriser un basculement de la pièce-support (220) autour du premier axe (01), après libération du second axe (02) lorsque la bobine n'est plus alimentée, afin de limiter alors le déplacement de la seconde extrémité du balancier lors de l'application de la force de commande.

3. Capteur selon l'une des revendications 1 et 2, caractérisé par le fait qu'il comprend deux organes interrupteurs (250, 251; 252, 253) disposés respectivement de part et d'autre du balancier (238), dans le plan de pivotement de celui-ci.

4. Capteur selon l'une des revendications 1 à 3, caractérisé par le fait que chaque organe interrupteur comprend une paire de contacts électriques (250,251; 252, 253) et une lamelle (260) électriquement conductrice, associée à chaque paire de contacts électriques (250, 251; 252, 253) et sollicitée en contact avec ceux-ci par ressort (261).

5. Capteur selon l'une des revendications 1 à 4, caractérisé par le fait que la première extrémité du balancier (230) recevant la force (F) de commande de pivotement, est disposée à l'opposée du premier axe (01), par rapport au second axe (02).

6. Capteur selon l'une des revendications 1 à 5, caractérisé par le fait que la distance séparant le premier axe (01) et le second axe (02) est sensiblement égale à la distance séparant le second axe (02) du point de contact du balancier (230) sur chaque organe interrupteur (260).

7. Capteur selon l'une des revendications 1 à 6, caractérisé par le fait que ladite pièce-support (220) est sollicitée en permanence par ressort (241), en contact avec le noyau (211) de la bobine électrique (210).

8. Capteur selon l'une des revendications 1 à 7, caractérisé par le fait que le second axe (223) est sensiblement perpendiculaire à l'axe de la bobine (210), qu'il est formé d'un pivot porté par une branche (222) de ladite pièce (220) cette branche (222) s'étendant parallèlement à ce même axe de la bobine, et par le fait que le balancier (230) est lui-même sensiblement parallèle à l'axe de la bobine.

9. Capteur selon l'une des revendications 1 à 8, caractérisé par le fait que les organes interrupteurs (250, 251, 252, 253) sont connectés en série avec des bobines (160) d'automaintien de commutateur;

10. Capteur selon l'une des revendications 1 à 9, caractérisé par le fait que le balancier (230) est commandé par une came solidaire du volant d'un véhicule et par le fait que les organes interrupteurs (250-253) sont connectés en série avec des bobines d'automaintien (160) intégrées à des commutateurs de changement de direction du véhicule automobile.

**Patentansprüche**

1. Sensorschalter, insbesondere zum Ausschalten der Fahrtrichtungsanzeiger von Kraftfahrzeugen, gekennzeichnet durch:
- ein Gehäuse (201) zum Aufnehmen
- eines Stützteils (220), das mindestens teilweise ferromagnetisch ist und frei um eine erste Achse (01) wippen kann,
- eines Schwinghebels (230), der um das Stützteil (220) um eine zweite, parallel zur ersten Achse gelegene Achse (02) schwenken kann,
- Mitteln zum Ausüben einer die Schwenkung eines ersten Endes des Schwinghebels verursachenden Steuerkraft (F),
- einer elektrischen Spule (210), welche das Wippen des Stützteils (220) unterbinden kann, wenn die Spule (210) unter Strom steht, um die Schwenkachse (02) des Schwinghebels stillzusetzen, und
- mindestens eines Unterbrecherorgans (250, 251, 260), welches in der Schwenkebene des Schwinghebels (230) zunächst dessen zweitem Ende angeordnet ist, derart, daß der Zustand dieses Unterbrecherorgans durch Betätigung des Schwinghebels und dessen Schwenken um die zweite Achse (02) verändert wird, wenn die Spule unter Strom steht.

2. Sensorschalter nach Anspruch 1, dadurch gekennzeichnet, daß die elektrische Spule (210) das Wippen des Stützteils (220) bezüglich des Gehäuses (201) blockieren kann, wenn die Spule (210) unter Strom steht, indem die zweite Achse (02), um welche der Schwinghebel (230) bezüglich des Gehäuses schwenken kann, fixiert wird, um eine Verlagerung des zweiten Endes des Schwinghebels bei Ausübung einer ein Schwenken verursachenden Steuerkraft (F) zu erzeugen und um ein Wippen des Stützteils (220) um die erste Achse (01) zuzulassen, nachdem die zweite Achse (02) freigegeben ist, bei nicht unter Strom stehender Spule, damit die Verlagerung des zweiten Endes des Schwinghebels bei Ausübung einer Steuerkraft begrenzt wird.

3. Sensorschalter nach Anspruch 1 oder 2, dadurch gekennzeichnet, daß er zwei Unterbrecherorgane (250, 251; 252, 253) aufweist, die je auf der einen und der anderen Seite des Schwinghebels (230) in dessen Schwenkebene angeordnet sind.

4. Sensorschalter nach einem der Ansprüche 1 bis 3, dadurch gekennzeichnet, daß jedes Unterbrecherorgan ein paar elektrische Kontakte (250, 251; 252, 253) und eine elektrisch leitende Lamelle (260) aufweist, die jeweils einem Paar von elektrischen Kontakten (250, 251; 252, 253) zugeordnet ist und durch eine Feder (261) damit in Kontakt gedrückt ist.

5. Sensorschalter nach einem der Ansprüche 1 bis 4, dadurch gekennzeichnet, daß das erste Ende des Schwinghebels (230), welches die sein Schwenken erzeugende Steuerkraft (F) aufnimmt, bezüglich der zweiten Achse (02) entgegengesetzt zur ersten Achse (01) angeordnet ist.

6. Sensorschalter nach einem der Ansprüche 1 bis 5, dadurch gekennzeichnet, daß der Abstand zwischen der ersten Achse (01) und der zweiten Achse (02) gleich dem Abstand zwischen der zweiten Achse (02) und dem Kontaktpunkt des Hebels (230) und jedem Unterbrecherorgan (260) ist.

7. Sensorschalter nach einem der Ansprüche 1 bis 6, dadurch gekennzeichnet, daß das Stützteil (220) ständig unter der Wirkung einer Feder (241) in Kontakt mit dem Kern (211) der elektrischen Spule (210) gedrückt ist.

8. Sensorschalter nach einem der Ansprüche 1 bis 7, dadurch gekennzeichnet, daß die zweite Achse (223) im wesentlichen senkrecht zur Achse der Spule (210) steht und von einem Zapfen an einem Arm (222) des Stützteils (220) gebildet ist, wobei dieser Arm (222) sich parallel zur Achse der Spule erstreckt, und daß der Schwinghebel (230) selbst genau parallel zur Achse der Spule steht.

9. Sensorschalter nach einem der Ansprüche 1 bis 8, dadurch gekennzeichnet, daß die Unterbrecherorgane (250, 251, 252, 253) mit Spulen (160) für die Selbsthaltung des Umschalters in Reihe geschaltet sind.

10. Sensorschalter nach einem der Ansprüche 1 bis 9, dadurch gekennzeeichnet, daß der Schwinghebel (230) von einem Nocken gesteuert ist, der fest mit dem Lenkrad des Kraftfahrzeuges verbunden ist, und daß die Unterbrecherorgane (250-253) mit Spulen (160) für die Selbsthaltung des Umschalters der Richtungsänderung des Kraftfahrzeuges in Reihe geschaltet sind.

**Claims**

1. Pickup/switch, in particular for controlling the stopping of the change of direction indicators of an automobile, characterised in that it comprises:
- a housing (201) which accommodates
- a supporting piece (220) which is at least partially ferromagnetic and free to tilt about a first axis (01),
- a balancer (230) mounted so as to be pivotable on the supporting piece (220) about a second median axis (02) parallel to the first,
- means capable of applying a pivot control force (F) to a first end of the balancer,
- an electric coil (210) adapted to prevent tilting of the supporting piece (220) when the coil (210) is supplied with current in order to immobilise the pivot axis (02) of the balancer, and
- at least one switch member (250, 251, 260) arranged in the pivot plane of the balancer (230) in the proximity of the second end of the latter in such a way that the state of this switch member is modified by actuation of the balancer upon pivoting of the latter about the second axis (02) when the coil is supplied with current.

2. Pickup/switch as claimed in claim 1, characterised in that the electric coil (210) is adapted to prevent tilting of the supporting piece (220) with respect to the housing (201) when the coil (210) is supplied with current, thus fixing the second pivot axis (02) of the balancer (230) with respect to the said housing, in order to produce a displacement of the second end of the balancer (230) upon application of the pivot control force (F) and in order to permit tilting of the supporting piece (220) about the first axis (01) after release of the second axis (02) when the coil is no longer supplied with current in order thus to limit the displacement of the second end of the balancer upon application of the control force.

3. Pickup as claimed in one of claims 1 and 2, characterised in that it comprises two switch members (250, 251; 252, 253) arranged respectively on one side and the other of the balancer (230) in the pivot plane of the latter.

4. Pickup as claimed in one of claims 1 to 3, characterised in that each switch member comprises a pair of electrical contacts (250, 251; 252, 253) and an electrically conductive strip (260) associated with each pair of electrical contacts (250, 251; 252, 253) and pulled into contact with the latter by a spring (261).

5. Pickup as claimed in one of claims 1 to 4, characterised in that the first end of the balancer (230) receiving the pivot control force (F) is arranged opposite the first axis (01) with respect to the second axis (02).

6. Pickup as claimed in one of claims 1 to 5, characterised in that the distance separating the first axis (01) and the second axis (02) is substantially equal to the distance separating the second axis (02) from the point of contact of the balancer (230) on each switch member (260).

7. Pickup as claimed in one of claims 1 to 6, characterised in that the said supporting piece (220) is pulled permanently by a spring (241) in contact with the core (211) of the electric coil (210).

8. Pickup as claimed in one of claims 1 to 7, characterised in that the second axis (223) is substantially perpendicular to the axis of the coil (210), is formed by a pivot supported on a branch (222) of the said piece (220), this branch (222) extending parallel to the same axis of the coil, and the balancer (230) is itself substantially parallel to the axis of the coil.

9. Pickup as claimed in one of claims 1 to 8, characterised in that the switch members (250, 251, 252, 253) are connected in series with automatic locking coils (160) of the commutator.

10. Pickup as claimed in one of claims 1 to 9, characterised in that the balancer (230) is controlled by a cam which is bound up with the steering-wheel of the vehicle and the switch members (250-253) are connected in series with automatic locking coils (160) which are joined with the change of direction commutators of the automobile.

0 098 194

FIG.1

# FIG_2

201
200
212
210
204
211
224
221
225
240
241

230
222
220

223
202

205

# FIG_3

230
F
230
F

220
O2

220
260
232
260
232
O1

FIG_4

FIG_5

FIG_6

FIG_7

FIG_8